# EUROPEAN PATENT APPLICATION

(11) **EP 4 625 649 A2**
(43) Date of publication of application: **01.10.2025**
(21) Application number: 25160334.6
(22) Date of filing: 26.02.2025
(51) Int. Cl.: H01M 50/209, H01M 50/211, H01M 50/242, H01M 50/291, H01M 50/293

(54) **BATTERY PACK**

(30) Priority: 04.03.2024 KR 20240030906
(71) Applicant: SAMSUNG SDI CO., LTD., Yongin-si, Gyeonggi-do 17084 (KR)
(72) Inventor: Wang, Hanjun, 17084 Yongin-si, Gyeonggi-do (KR); Lim, Seungju, 17084 Yongin-si, Gyeonggi-do (KR)
(74) Representative: Gulde & Partner

(57) **Abstract**

A battery pack includes a battery cell stack in which a plurality of battery cells are stacked and battery cell junctions are disposed between the battery cells. Each of the battery cell junctions includes a first tape arranged to correspond to an edge of a surface of one of the battery cells and a second tape arranged to correspond to a central portion of the surface of the one of the battery cells. The first tape and the second tape form a single layer and are spaced apart from each other.

## Description

### CROSS-REFERENCE TO RELATED APPLICATION

The present application claims priority and the benefit of Korean Patent Application No. 10-2024-0030906, filed on March 04, 2024, in the Korean Intellectual Property Office, the entire disclosure of which is incorporated herein by reference.

### BACKGROUND

### 1. Field

One or more embodiments relate to a battery pack.

### 2. Description of the Related Art

Generally, secondary batteries are chargeable and dischargeable, unlike primary batteries that cannot be recharged. Secondary batteries are used as energy sources for mobile devices, electric vehicles, hybrid vehicles, electric bicycles, and uninterruptible power supplies. Depending on the type of external devices to which they are applied, the secondary batteries may be used in the form of a single battery or a module in which batteries are connected and bundled into one unit.

Small mobile devices, such as mobile phones, may operate for a certain period of time with an output from a single battery. However, when a long-term operation or high-power operation is required, such as in the case of electric vehicles or hybrid vehicles that consume a lot of power, a module type including multiple batteries is preferred due to issues of output and capacity. An output voltage or output current may be increased with the number of built-in batteries.

### SUMMARY

One or more embodiments include a battery pack including a plurality of battery cells, which is reliable even if dropped because a swelling space is provided between the plurality of battery cells.

However, the technical problems to be solved by the present disclosure are not limited to the above-mentioned problems, and other problems not mentioned may be clearly understood by those skilled in the art from the description herein.

Additional aspects will be set forth in part in the description which follows and, in part, will be apparent from the description, or may be learned by practice of the presented embodiments of the present disclosure.

According to one or more embodiments, a battery pack includes a battery cell stack in which a plurality of battery cells are stacked and battery cell junctions disposed between the battery cells, wherein each of the battery cell junctions includes a first tape arranged to correspond to an edge of a surface of one of the battery cells and a second tape arranged to correspond to a central portion of a surface of the one of the battery cells, and wherein the first tape and the second tape form a single layer and are spaced apart from each other.

The first tape may be stiffer than the second tape.

The second tape may be compressible.

The second tape may include a sponge.

The first tape may include rubber.

The first tape may surround the second tape.

The first tape and the second tape may be spaced apart from each other by a second gap.

The second gap may be about 1 mm or more.

The first tape may have a first gap cut on one side.

The first tape and the second tape may be arranged to be spaced apart from each other by a second gap, wherein the first gap may be twice the second gap.

The first gap may be about 2 mm or more.

The thickness of the second tape may be 10 to 20 percent less than the thickness of the first tape.

The thickness of the second tape may be about 10 to about 20 percent greater than the thickness of the first tape.

According to one or more embodiments, a battery pack includes a battery cell stack in which a plurality of battery cells are stacked and battery cell junctions disposed between the battery cells, wherein each of the battery cell junctions includes a first layer formed to correspond to a surface of one of the battery cells and a second layer and a third layer disposed on opposite sides of the first layer and formed to correspond to the surface of the one of the battery cells.

The second and third layers may be harder than the first layer.

The first layer may be compressible.
the first layer may include an ethylene-vinyl acetate (EVA) foam or a polyethylene (PE) foam.

The second layer and the third layer may each include a polycarbonate (PC) sheet.

The second layer and the third layer may have a thickness of about 0.1 mm or more.

Other aspects, features and advantages other than those described above will become apparent from the detailed description, claims and drawings provided below.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is an exploded view of a battery cell according to embodiments;
FIG. 2 is a perspective view of the battery cell of FIG. 1 in an assembled state;
FIG. 3 is a partially exploded perspective view of a battery cell stack;
FIG. 4(A) is a cross-sectional view taken along line A-A' of FIG. 3, showing a state before swelling occurs in the battery cell of FIG. 3, and FIG. 4(B) is a cross-sectional view taken along line A-A' of FIG. 3, showing a state when swelling occurs in the battery cell of FIG. 3;
FIG. 5 shows a plan view of a first battery cell junction according to embodiments;
FIG. 6 is an exploded perspective view of a first battery cell junction according to embodiments;
FIG. 7(A) is a cross-sectional view taken along line A-A' of FIG. 3, showing a state in which a thickness of a second tape is less than a thickness of a first tape; FIG. 7(B) is a cross-sectional view taken along line A-A' in FIG. 3, showing a state in which the thickness of the second tape is greater than the thickness of the first tape;
FIG. 8 is a partially exploded perspective view of a battery cell stack according to other embodiments;
FIG. 9(A) is a cross sectional view taken along line C-C' of FIG. 8, showing a state before swelling occurs in the battery cell of FIG. 8, and FIG. 9(B) is a cross sectional view taken along line C-C' of FIG. 8, showing a state when swelling occurs in the battery cell of FIG. 8; and
FIG. 10 is an exploded perspective view of a junction portion of a second battery cell according to other embodiments.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," if preceding a list of elements, modify the entire list of elements and do not modify the individual elements of the list.

Hereinafter, a battery pack according to embodiments will be described in detail with reference to the accompanying drawings. The terms or words used in the specification and claims should not be construed as limited to their usual or dictionary meanings, but should be interpreted as meaning and concept consistent with the technical idea of the present disclosure based on the principle of definability that the inventor may appropriately define the concept of terms in order to explain his or her invention in the best way. Accordingly, the embodiments described in this specification and the configurations shown in the drawings are only some of the most preferred embodiments of the present disclosure and do not represent the entire technical idea of the present disclosure, thus, it should be understood that at the time of filing this application, there may be various equivalents and modifications that may replace them. Also, when used herein, "comprise, include," and/or "comprising, including" refer to specifying the presence of mentioned features, numbers, steps, operations, members, elements, and/or groups thereof, and it does not exclude the presence or addition of one or more other shapes, numbers, operations, members, elements and/or groups. Additionally, when describing embodiments of the present disclosure, "may" and "may be" may include "one or more embodiments of the present disclosure."

Additionally, to facilitate understanding of the disclosure, the attached drawings may not be drawn to scale, but the dimensions of some components may be exaggerated. Additionally, like reference numbers may be assigned to like components in different embodiments.

The statement that two comparison objects are 'the same' means that they are 'substantially identical.' Therefore, substantially identical may include a deviation that is considered low in the art, for example, a deviation of less than 5%. Also, the term that a certain parameter is uniform in a certain region may mean uniformity from an average perspective.

Although first, second, etc. are used to describe various components, these components are of course not limited by these terms. These terms are only used to distinguish one component from another component, and unless specifically stated to the contrary, the first component may also be a second component.

Throughout the specification, unless otherwise stated, each component may be singular or plural.

The placement of any component on the "top (or bottom)" of a component or the "top (or bottom)" of a component means that any component is placed in contact with the top (or bottom) of the component and may mean that other components may be interposed between the component and any component disposed on (or under) the component.

Additionally, when a component is described as being "connected," "coupled," or "combined" to another component, it should be understood that the components may be directly connected or combined to each other, but the other component may be "interposed" between each component", or each component may be "connected", "coupled", or "combined" through other components. Additionally, when a part is said to be electrically coupled to another part, this includes not only a case when the parts are directly connected, but also a case when the parts are connected with other intervening elements.

When referring to "A and/or B" throughout the specification, this means A, B or A and B, unless specifically stated to the contrary. That is, "and/or" includes all or any combination of the plurality of listed items. When referring to "C to D," this means C or higher and D or lower, unless specifically stated to the contrary.

The terms used in this specification are for describing embodiments of the present disclosure and are not intended to limit the disclosure.

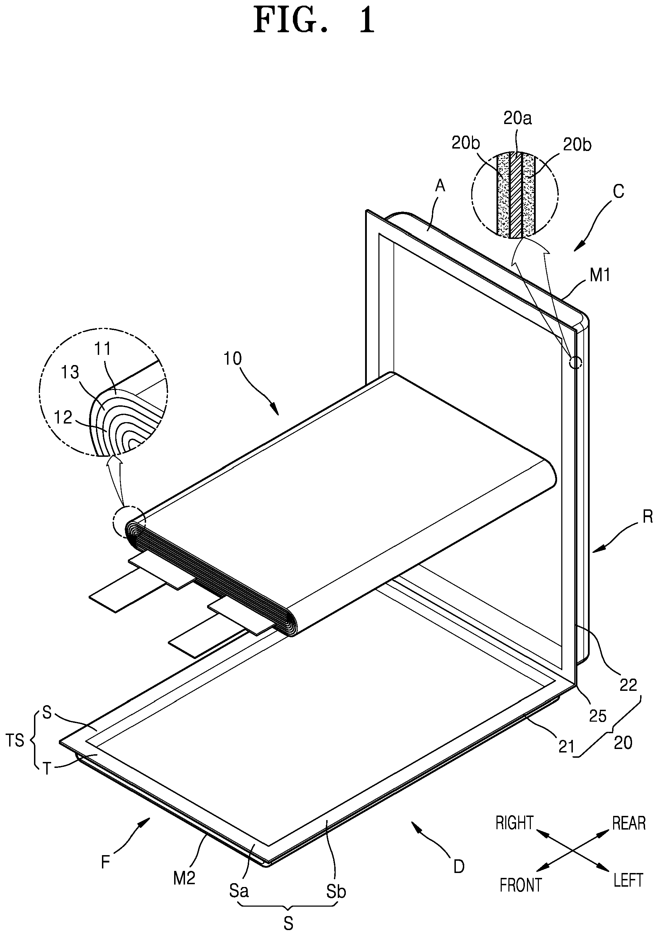

Hereinafter, a battery cell C according to embodiments will be described with reference to FIGS. 1 to 7(B).

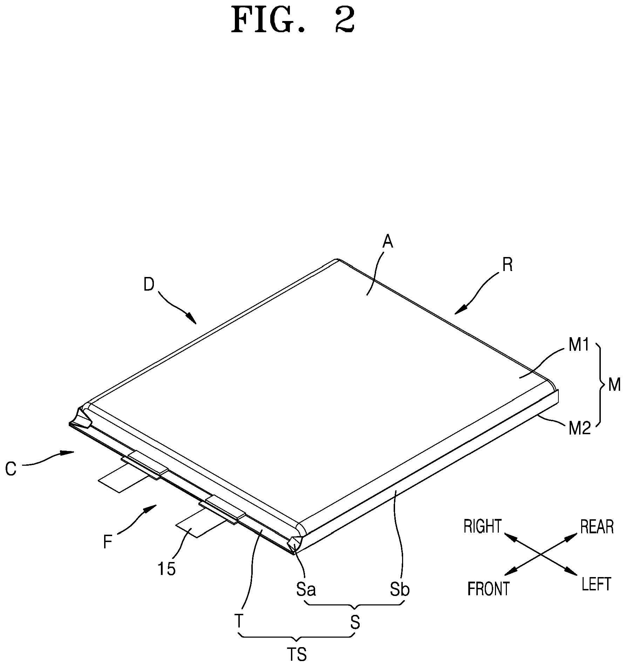

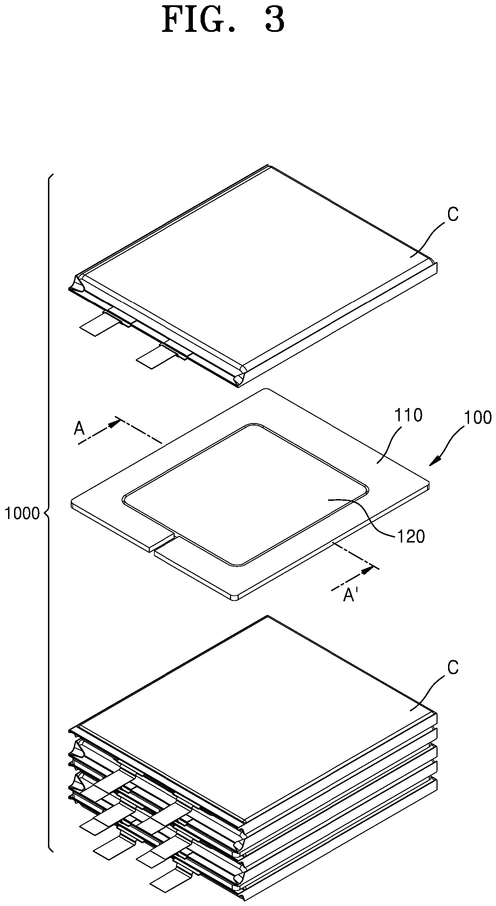

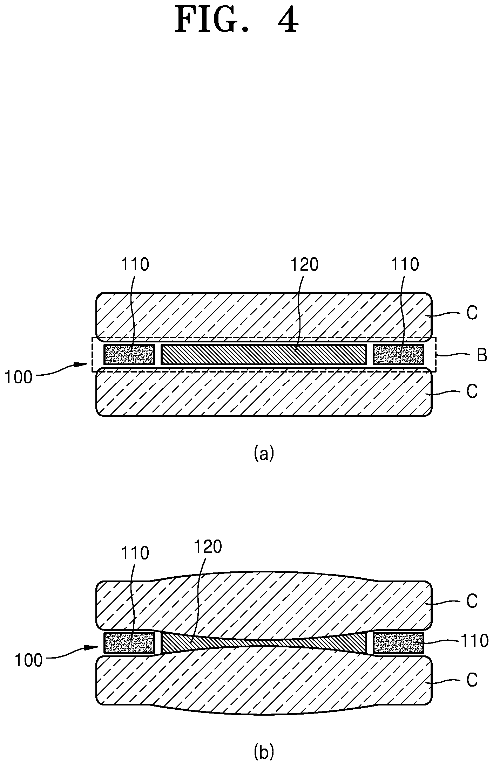

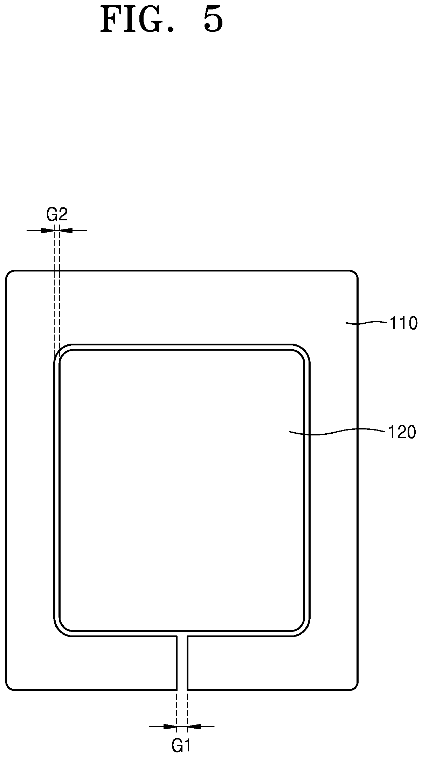

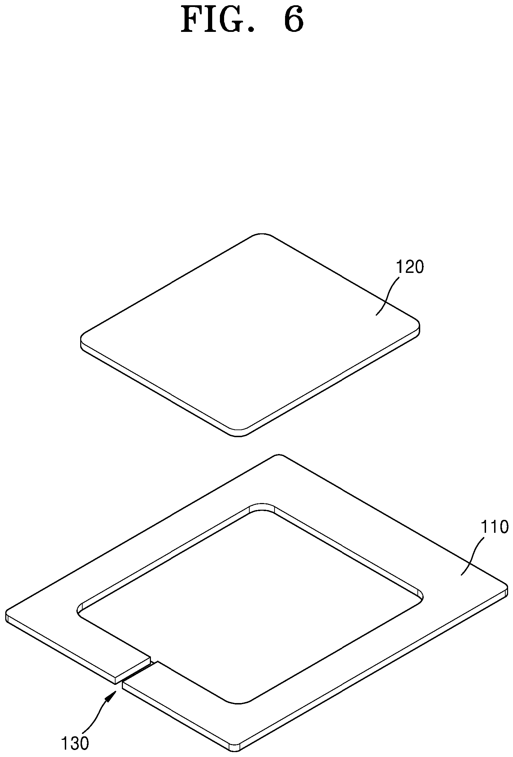

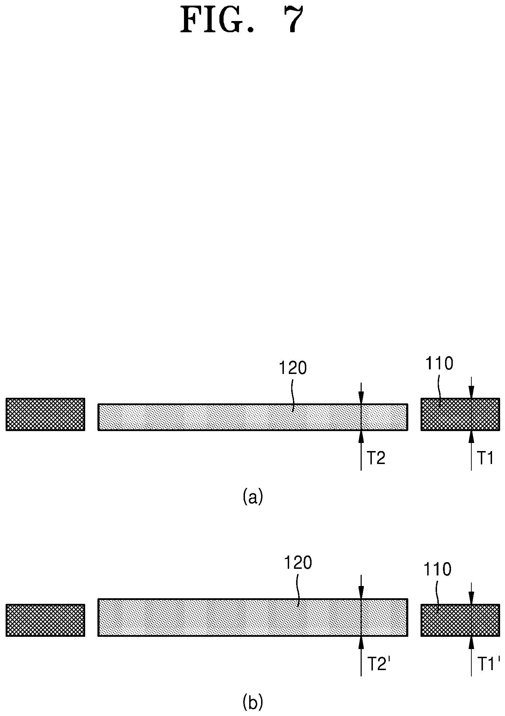

FIG. 1 shows an exploded view of the battery cell C according to embodiments, FIG. 2 is a perspective view of the battery cell C of FIG. 1 in an assembled state, FIG. 3 is a partially exploded perspective view of a battery cell stack, FIG. 4(A) shows a state before swelling occurs in the battery cell C of FIG. 3, FIG. 4(B) shows a state after swelling occurs in the battery cell C, FIG. 5 shows a plan view of a first battery cell junction according to embodiments, FIG. 6 is an exploded perspective view of the first battery cell junction according to embodiments, FIG. 7(A) shows a state in which a thickness of a second tape is less than a thickness of a first tape, FIG. 7(B) shows a state in which the thickness of the second tape is greater than the thickness of the first tape.

Referring to FIGS. 1 and 2, the battery cell C includes an electrode assembly 10, an accommodation portion A in which the electrode assembly 10 is accommodated, and a sealing portion TS extending along an edge of the accommodation portion A to seal the accommodation portion A. The electrode assembly 10 may be formed in a roll shape by winding first and second electrode plates 11 and 12 arranged to face each other with a separator 13 therebetween or a stack shape by stacking a plurality of the first and second electrode plates 11 and 12 with the separator therebetween. An electrode tab 15 forming a charge and discharge path may be connected to the electrode assembly 10. The electrode tab 15 may include two electrode tabs 15 of different polarities electrically connected to the electrode assembly 10, and the electrode tab 15 connected to the electrode assembly 10 within the accommodation portion A may be pulled out to outside of the accommodation portion A through a front surface F of the accommodation portion A.

The accommodation portion A in which the electrode assembly 10 is accommodated may be formed in a substantially rectangular parallelepiped shape. More specifically, the accommodation portion A may include the front surface F from which the electrode tab 15 protrudes, a rear surface R opposite to the front surface F, a pair of main surfaces M that connect the front surface F and the rear surface R and occupy a relatively large area, and a pair of side surfaces D that connect the front surface F and the rear surface R and have a relatively small surface area. The main surfaces M may occupy the largest surface area among the surfaces of the accommodation portion A and may be formed with a larger surface area than the front surface F, the rear surface R, and the side surfaces D. The front surface F, the rear surface R, and the pair of side surfaces D may be connected to the main surfaces M at different corners along the main surface M of the accommodation portion A.

In embodiments of the present disclosure, the main surface M and the side surface D may be formed in pairs at positions facing each other. For example, the main surface M may include first and second main surfaces M1 and M2 facing each other. Among the surfaces connecting the front surface F and the rear surface R, a surface having a relatively large surface area may correspond to the main surface M or the side surface M with a large surface area, and among the surfaces connecting the front surface F and the rear surface R, a surface having a relatively small surface area may correspond to the side surface M or the side surface D with a small surface area, Throughout this specification, the side surface D may denote a side surface D with a small surface area and, in particular, unless mentioned as a large surface area side surface M, may refer to a small surface area side surface D, and the large surface area side surface M may refer to the main side surface M.

The battery cell C may further include the sealing portion TS formed along the edge of the accommodation portion A to seal the accommodation portion A. The accommodation portion A for accommodating the electrode assembly 10 and the sealing portion TS for sealing the accommodation portion A may be formed from an exterior material 20 continuously formed to surround the electrode assembly 10. That is, the exterior material 20 may surround the electrode assembly 10 and form the accommodation portion A that accommodates the electrode assembly 10, and the extra exterior material 20 remaining after forming the accommodation portion A may form the sealing portion TS that seals the accommodation portion A.

The exterior material 20 may include a flexible exterior material 20 such as a layered structure, and more specifically, a metal layer 20a, such as an aluminum sheet and an insulating layer 20b, such as a resin coating layer formed on both surfaces of the metal layer 20a. At this time, the metal layer 20a may be exposed to the outside through a cross-section where the exterior material 20 ends. As described below, the metal layer 20a may be exposed at an edge of the sealing portion TS where first and second exterior materials 21 and 22 are coupled to face each other with the electrode assembly 10 therebetween.

In embodiments of the present disclosure, the exterior material 20 may include the first and second exterior materials 21 and 22 that are coupled to face each other with the electrode assembly 10 therebetween. The electrode assembly 10 may be positioned between the first and second exterior materials 21 and 22, the first and second exterior materials 21 and 22 may be folded to overlap each other through a folding portion 25 connecting the first and second exterior materials 21 and 22, parts that contact each other are joined to each other along edge regions of the first and second exterior materials 21 and 22 by heat fusion or the like, and thus, an inner region of the first and second exterior materials 21 and 22 facing each other with the electrode assembly 10 therebetween may be formed as the accommodation portion A, and the edge region of the first and second exterior materials 21 and 22 joined to each other may be formed as a sealing portion TS.

The sealing portion TS may be formed continuously along the edge regions of the first and second exterior materials 21 and 22 except for the folding portion 25. More specifically, the sealing portion TS may include a terrace portion T extending in a front surface F direction of the accommodation portion A and a side sealing portion S extending in a side surface D direction of the accommodation portion A. The electrode tab 15 connected to the electrode assembly 10 within the accommodation portion A may be pulled out to outside of the accommodation portion A through the terrace portion T extending in the front surface F direction of the accommodation portion A. In addition, a protection circuit module may be seated on the terrace portion T, and the electrode tab 15 that is pulled out through the terrace portion T may be bent to be connected to the protection circuit module seated on the terrace portion T.

The side sealing portion S may include a main body Sb of the side sealing portion S at a position corresponding to the accommodation portion A and a front-end portion Sa extending from the main body Sb of the side sealing portion S to a position outside of the accommodation portion A. The side sealing portion S may be folded toward the accommodation portion A to reduce an area occupied by the entire battery cell C, and the side sealing portion S may be folded toward the accommodation portion A through a first folding part and a second folding part. That is, in the first folding part, the main body Sb of the side sealing portion S at a position corresponding to the accommodation portion A and the front-end portion Sa of the side sealing portion S at a position outside of the accommodation portion A are folded up together. After the first folding, a second folding may be performed, where the front-end portion Sa is folded to be concavely recessed toward edges where the front surface F of the accommodation portion A and the terrace portion T come into contact with each other. Through the first and second folding, the main body portion Sb of the side sealing portion S is folded up toward the side surface D of the accommodation portion A and may be placed on the side surface D. In the side sealing portion S, the front-end portion Sa may form a dog ear shape that is concavely recessed toward the edge formed by the front surface F of the accommodation portion A and the terrace portion T.

At the edge of the side sealing portion S, the metal layer 20a may be exposed through the cross-section where the exterior material 20 forming the side sealing portion S ends. Because the main body Sb of the side sealing portion S is folded onto the side surface D of the accommodation portion A, the metal layer 20a exposed through the edge of the main body Sb may not protrude from the side surface D of the accommodation portion A. The front-end portion Sa of the side sealing portion S is folded to be concavely recessed toward the edge formed by the front surface F of the accommodation portion A and the terrace portion T. Thus, the metal layer 20a exposed through the edge of the front-end portion Sa of the side sealing portion S may not protrude from the front surface F of the accommodation portion A. That is, the side sealing portion S may not protrude from the side surface D of the accommodation portion A and the front surface F of the accommodation portion A and may be folded in a shape that follows an outer shape of the accommodation portion A while the main body Sb of the side sealing portion S is folded onto the side surface D of the accommodation portion A and the front-end portion Sa of the side sealing portion S is folded toward the edge where the terrace portion T and the front surface F of the accommodation portion A contact each other.

In embodiments of the present disclosure, an outer shape of the battery cell C may generally follow the outer shape of the accommodation portion A, and the outer surface of the accommodation portion A, i.e., the front surface F, the rear surface R, the main surface M, and the side surface D may substantially denote the outer surface of the battery cell C. The battery cell C may further include the sealing portion TS that seals the accommodation portion A with the electrode assembly 10 is accommodated therein. The sealing portion TS, that is, at least the side seal portion S may be folded toward the side surface D and the front surface F of the accommodation portion A in order to minimize an area occupied by the battery cell C. Thus, the external shape of the battery cell C may generally follow that of the accommodation portion A, and accordingly, the front surface F, the rear surface R, the main surface M and the side surface D of the accommodation portion A may substantially denote the front, back, main surface, and side of the battery cell C. The terrace portion T may be formed at a front position of the battery cell C, and the terrace portion T is generally in the form of a plate rather than a surface shape so that the protection circuit module is seated thereon. If the external shape of the battery cell C is viewed as approximately a rectangular parallelepiped shape, the front of the battery cell C may denote the front surface F of the accommodation portion A.

Referring to FIGS. 3 to 7(b), a battery pack according to embodiments may include a battery cell stack 1000 in which a plurality of battery cells are stacked and a first battery cell junction 100 is disposed between the plurality of battery cells. The first battery cell junction 100 may include a first tape 110 formed to correspond to an edge of a surface of one of the battery cells and a second tape 120 formed to correspond to a central portion of the surface of the battery cell C. The first tape and the second tape form a single layer and are spaced apart from each other. Surfaces of the first tape 110 and the second tape 120 may include an adhesive material to bond the two battery cells C disposed on both sides of the first battery cell junction 100 to each other.

The first tape 110 may be formed to be stiffer than the second tape 120. That is, the first tape may include a hard material, and the second tape may include a soft material. The first tape 110 may include hard rubber. By the first tape 110 including hard rubber, if the battery pack is dropped the shock may be absorbed. The second tape 120 may include a compressible material. For example, the second tape 120 may include sponge. If swelling of the battery cell C occurs, the second tape 120 including sponge may effectively absorb swelling. The first battery cell junction 100 may include different materials including the first tape 110 and the second tape 120.

In this way, first battery cell junctions 100 may be disposed between the battery cells C so that the first tape 110 and the second tape 120 of each of the first battery cell junctions 100, which include different materials, form a single layer. As such, if the battery pack including the battery cell stack 1000 is dropped, then the shock resulting from the fall is absorbed through the first tape 110 including a hard material. Further, when swelling of occurs in a battery cell C of the battery cell stack 1000, particularly when the central portion of the surface of the battery cell C swells, the second tape 120 disposed at a position corresponding to the swelling portion to thereby absorbs the swelling of the battery cell C.

In addition, the first tape 110 for ensuring durability and the second tape 120 for absorbing swelling form only one layer between the battery cells C. Thus, an increase in volume of the battery pack may be prevented, and a compact battery pack structure may be manufactured.

According to embodiments, the first tape 110 may be formed to surround the second tape 120. The first tape 110 may be disposed between the battery cells C at a position corresponding to the edge of the battery cells C, that is, at the edge position of the battery cell C that may absorb an impact applied to the battery cells C if the battery pack is dropped on any part thereof.

Additionally, the second tape 120 is disposed at the center of the surface of the battery cell C, where swelling occurs easily. Thus, the second tape may effectively absorb swelling of the battery cell C.

According to embodiments, the first tape 110 and the second tape 120 may be arranged to be spaced apart from each other by a (second) gap G2. As the first tape 110 is pressed by pressure between the battery cells C, the first tape 110 may spread in a direction perpendicular to the pressing direction. Likewise, the second tape 120 may receive the swelling pressure of the battery cell C and spread in a direction perpendicular to the direction of the swelling pressure. If the first tape 110 and the second tape 120 spread in a direction perpendicular to the direction of received pressure, interference may occur between the first tape 110 and the second tape 120. Thus, the shock absorption of the battery pack and the swelling absorption of the battery cells C may not be performed properly. Accordingly, the second gap G2 is formed between the first tape 110 and the second tape 120 to prevent an interference between the two components when the first tape 110 and the second tape 120 spread in a direction perpendicular to the direction of pressure received from the battery cell C. The second gap G2 may be, for example, 1 mm or more. If the second gap G2 is less than 1 mm, the gap between the first tape 110 and the second tape 120 may be filled and mutual interference may occur.

According to embodiments, the first tape 110 may be formed to have a (first) gap G1 that includes a portion 130 cut on one side. The second tape 120 may spread in a direction perpendicular to the direction of the swelling pressure by receiving swelling pressure from the battery cell C. As the second tape 120 spreads, the first tape 110 may receive pressure from the second tape 120 in a direction perpendicular to the direction of pressure from the battery cell C. Assuming that the first tape 110 is formed in a ring shape, if pressure is applied from the center of the ring shape to the ring shape, the ring shape may not be able to withstand the pressure and the ring shape may be damaged. Accordingly, as the first gap G1 is formed by cutting one side of the first tape 110, which has a circumferential shape, when the swelling pressure received by the second tape 120 from the battery cell C is transmitted to the first tape 110, the first gap G1 increases and pressure transmitted from the second tape 120 may be absorbed. Thus, there may be only a slight deformation to the extent that the first gap G1 is widened. Additionally, as the second tape 110 is pressed from the swelling of the battery cell C, the second tape 110 is pushed into a space of the first gap G1, and the shape of the first battery cell junction 100 may be functionally maintained.

According to embodiments, the first gap G1 may be formed to be twice the size of the second gap G2. The first gap G1 may be, for example, 2 mm or more. As the first gap G1 is formed greater than the second gap G2, when the second tape 110 spreads, an accommodating space of a portion of the second tape 110 that is pushed into the space formed by the first gap G1 may become wider.

Referring to FIG. 7, a thickness T2 of the second tape 120 may be 10 to 20 percent less than a thickness T1 of the first tape 110. This is to further reduce the deformation of the second tape 120 due to absorption of pressure when swelling of the battery cell C occurs because the function of volume absorption through swelling may not account for a thickness difference (T1-T2) between the thickness T1 of the first tape 110 and the thickness T2 of the second tape 120.

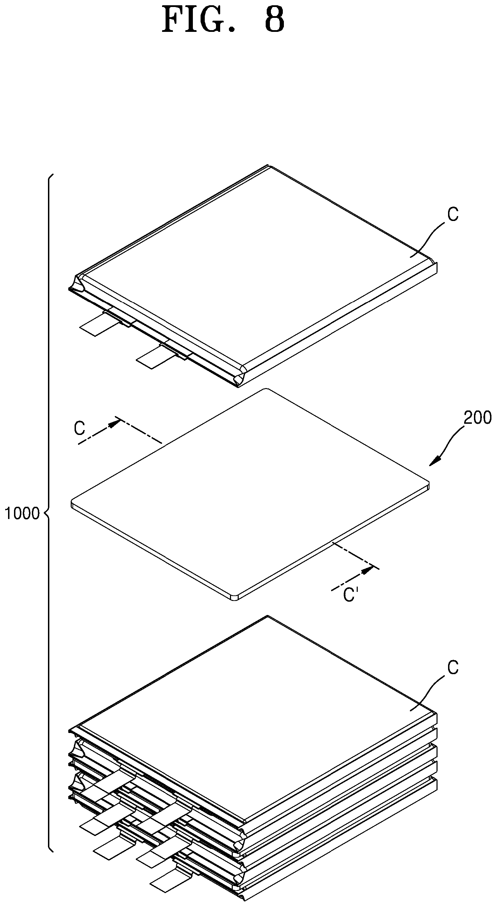

Alternatively, the thickness T2 of the second tape 120 may be 10 to 20 percent greater than the thickness T1 of the first tape 110. In this way, by further increasing the area where the battery cell C is in contact with the second tape 120, the area that absorbs the swelling of the battery cell C may be increased. Thus, the battery cell swelling absorption ability of the second tape 120 may be improved.
With reference to FIGS. 8 to 10, a battery pack according to other embodiments will be described. Content shown in FIGS. 1 to 7(b) may not be repeated in FIGS. 8 to 10.

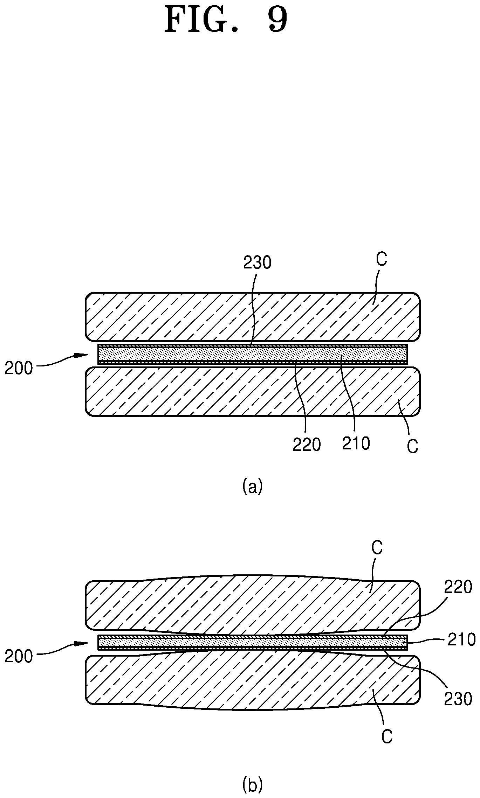

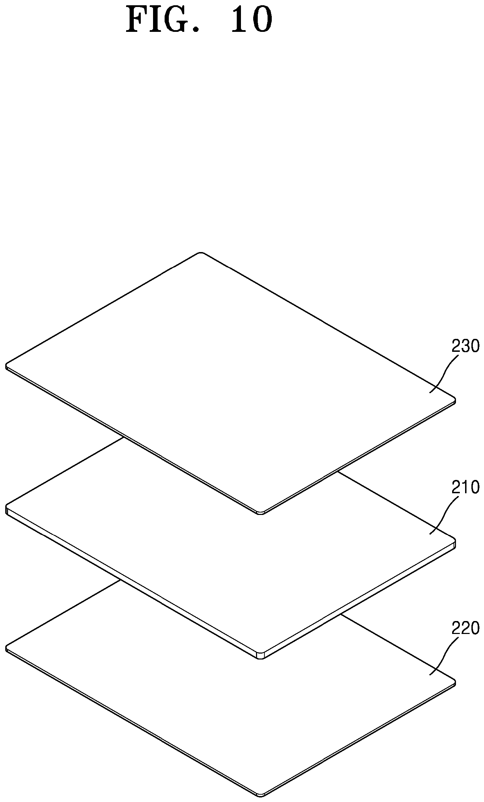

FIG. 8 shows a partially exploded perspective view of a battery cell stack 1000 according to other embodiments, FIG. 9(a) shows a state before swelling occurs in the battery cell C of FIG. 8, FIG. 9(b) shows a state after swelling occurs in the battery cell C, and FIG. 10 shows an exploded perspective view of a second battery cell junction 200 according to other embodiments.

Referring to FIGS. 8 to 10, the battery pack according to embodiments may include a battery cell stack 1000 in which a plurality of battery cells are stacked Second battery cell junctions 200 may be disposed between a plurality of battery cells C that constitute the battery cell stack 1000. each of the second battery cell junctions 200 may include a first layer 210 formed to correspond to a surface portion of the battery cell C, and a second layer 220 and a third layer 230 that are respectively disposed on both sides of the first layer 210, with the second and third layers 220 and 230 formed to correspond to the surface portion of the battery cells C on both sides of the first layer 210.

The surface portions of the second layer 220 and the third layer 230 may include an adhesive material to bond the two battery cells C disposed on both sides of the second battery cell junction 200 to each other. Also, the second layer 220 and the third layer 230 may maintain a bonded state with the first layer 210 disposed between the second layer 220 and the third layer 230.

The second layer 220 and the third layer 230 may be formed to be harder than the first layer 210. That is, the second layer 220 and the third layer 230 may include a hard material, and the first layer 210 may include a soft material that is compressible.

The second layer 220 and the third layer 230 may include, for example, a hard polycarbonate (PC) sheet. The second layer 220 and the third layer 230 including a hard PC sheet material are disposed in direct contact with the surface of the battery cell C and may absorb impact if the battery pack is dropped. According to embodiments, the second layer 220 and the third layer230 may have a thickness of 0.1 mm or more. If the thickness is less than 0.1mm, the durability of the second and third layers 220 and 230 may be reduced, and, thus, it may be difficult to absorb impact when the battery pack is dropped.

The first layer 210 may be disposed between the second layer 220 and the third layer 230 and may include a compressible material. For example, the first layer 210 may include an ethylene-vinyl acetate (EVA) foam or polyethylene (PE) foam. When swelling of the battery cell C occurs, the first layer 210 including the EVA Form or PE doam may effectively absorb swelling. Thus, as described above, the second battery cell junction 200 may be as such that the first layer 210, the second layer 220, and the third layer 230 include different materials.

In this way, the first layer 210, the second layer 220, and the third layer 230, which include different materials, form a stacked structure and are disposed between the battery cells C. If the battery pack including the battery cell stack 1000 is dropped, shock caused by the fall is absorbed through the second layer 220 and the third layer 230 including a hard material. Further, when swelling of the battery cell C occurs, because the central portion of the surface of the battery cell C swells, the first layer 210 disposed at a position corresponding to the central portion absorbs the swelling of the battery cell C.

According to the present disclosure, provided is a battery pack including battery cell junctions that provide for the reliability of the battery pack if the battery pack is dropped and at the same time prevents the thickness of the battery pack from increasing by securing a swelling space between the battery cells.

However, the effects that may be achieved through the present disclosure are not limited to the above-described effects, and other technical effects not mentioned will be clearly understood by those skilled in the art from the description herein.

While the present disclosure has been described above with limited examples and drawings, it is not limited thereto, and of course, various modifications and changes may be made by those skilled in the art to which the present disclosure pertains, within the scope of equivalency of the technical spirit of the present disclosure and the scope of the claims described below.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope of the present disclosure as defined by the following claims.

## Claims

1. A battery pack comprising:
a battery cell stack (1000) including a plurality of battery cells (C); and
battery cell junctions disposed between the battery cells (C),
wherein each of the battery cell junctions includes:
a first tape (110) arranged to correspond to an edge of a surface of one of the battery cells (C); and
a second tape (120) arranged to correspond to a central portion (130) of the surface of one of the battery cells (C), and
wherein the first tape (110) and the second tape (120) form a single layer and are spaced apart from each other.

2. The battery pack as recited in claim 1, wherein the first tape (110) is stiffer than the second tape (120).

3. The battery pack as recited in claim 1 or 2, wherein the second tape (120) is compressible.

4. The battery pack as recited in claims 1 to 3, wherein the second tape (120) includes a sponge.

5. The battery pack as recited in claims 1 to 4, wherein the first tape (110) includes rubber.

6. The battery pack as recited in claims 1 to 5, wherein the first tape (110) surrounds the second tape (120).

7. The battery pack as recited in claims 1 to 6, wherein the first tape (110) and the second tape (120) are spaced apart from each other by a gap and/or
wherein the gap is about 1 mm or more.

8. The battery pack as recited in claims 1 to 7, wherein the first tape (110) has a gap cut on one side and/or
wherein the gap is a first gap (G1),
wherein the first tape (110) and the second tape (120) are arranged to be spaced apart from each other by a second gap (G2),
wherein the first gap (G1) is twice the second gap (G2) or
wherein the first gap (G1) is about 2 mm or more.

9. The battery pack as recited in claims 1 to 8, wherein a thickness (T2) of the second tape (120) is 10 to 20 percent less than a thickness (T1) of the first tape (110).

10. The battery pack as recited in claims 1 to 8, wherein a thickness (T2) of the second tape (120) is about 10 to about 20 percent greater than a thickness (T1) of the first tape (110).

11. A battery pack comprising:
a battery cell stack (1000) including a plurality of battery cells (C); and
battery cell junctions disposed between the battery cells (C),
wherein each of the battery cell junctions includes:
a first layer (210) formed to correspond to a surface of one of the battery cells (C); and
a second layer (220) and a third layer (230) disposed on opposite sides of the first layer (210) and formed to correspond to the surface of the one of the battery cells (C).

12. The battery pack as recited in claim 11, wherein the second and third layers (220, 230) are harder than the first layer (210).

13. The battery pack as recited in claim 12, wherein the first layer (210) is compressible.

14. The battery pack as recited in claim 12 or 13, wherein the first layer (210) includes an ethylene-vinyl acetate, EVA, foam or a polyethylene, PE, foam.

15. The battery pack as recited in claims 12 to 14, wherein the second layer (220) and the third layer (230) each include a polycarbonate, PC, sheet and/ or
wherein the second layer (220) and the third layer (230) have a thickness of about 0.1 mm or more.
